# EUROPÄISCHE PATENTSCHRIFT

(11) **EP 4 164 998 B1**
(45) Veröffentlichungstag und Bekanntmachung des Hinweises auf die Patenterteilung: **13.03.2024**
(21) Anmeldenummer: 21763277.7
(22) Anmeldetag: 10.08.2021
(51) Int. Cl.: C04B 35/622, D01F 9/08, C04B 35/626, D01F 1/10, D01D 5/04

(54) **ZRO2-VERSTÄRKTE MULLITFASERN, VERFAHREN ZU DEREN HERSTELLUNG UND VERWENDUNG**
ZRO2-REINFORCED MULLITEFIBERS, PROCESS FOR MANUFACTURING SAME, AND USE THEREOF
FIBRES DE MULLITE RENFORCÉES PAR DU ZRO2, PROCÉDÉ POUR LA FABRICATION DE CELLES-CI ET LEUR UTILISATION

(30) Priorität: 12.08.2020 DE 102020121221
(43) Veröffentlichungstag der Anmeldung: 19.04.2023
(73) Patentinhaber: Deutsche Institute für Textil- und Faserforschung Denkendorf, 73770 Denkendorf (DE)
(72) Erfinder: CLAUSS, Bernd, 73033 Göppingen (DE); PFEIFER, Stephanie, 71065 Sindelfingen (DE); REINDERS, Leonie, 73760 Ostfildern (DE); BUCHMEISER, Michael, R., 73630 Remshalden (DE)
(74) Vertreter: Meissner Bolte Partnerschaft mbB
(86) Internationale Anmeldenummer: PCT/EP2021/072266
(87) Internationale Veröffentlichungsnummer: WO 2022/034072

(56) Entgegenhaltungen:
- WO-A1-92/09541
- CN-B- 104 086 200
- FR-A1- 2 714 373
- REINDERS LEONIE ET AL: "Development of mullite fibers and novel zirconia-toughened mullite fibers for high temperature applications", JOURNAL OF THE EUROPEAN CERAMIC SOCIETY, Bd. 41, Nr. 6, 31. Dezember 2020 (2020-12-31), Seiten 3570-3580, XP055865818, AMSTERDAM, NL ISSN: 0955-2219, DOI: 10.1016/j.jeurceramsoc.2020.12.048 Gefunden im Internet: URL:https://www.sciencedirect.com/science/ article/pii/S0955221920310177/pdfft?md5=42 fcdc40df93f654b1524cd78739c52b&pid=1-s2.0- S0955221920310177-main.pdf>
- WANG WEI ET AL: "Preparation and thermal stability of zirconia-doped mullite fibers via sol-gel method", PROGRESS IN NATURAL SCIENCE: MATERIALS INTERNATIONAL, vol. 21, no. 2, 1 April 2011 (2011-04-01), pages 117-121, XP028910888, ISSN: 1002-0071, DOI: 10.1016/S1002-0071(12)60044-6
- ZHANG Y ET AL: "Mullite fibres prepared by sol-gel method using polyvinyl butyral", JOURNAL OF THE EUROPEAN CERAMIC SOCIETY, ELSEVIER, AMSTERDAM, NL, vol. 29, no. 6, 1 April 2009 (2009-04-01), pages 1101-1107, XP025939720, ISSN: 0955-2219, DOI: 10.1016/J.JEURCERAMSOC.2008.08.008 [retrieved on 2008-09-17]

## Beschreibung

Die Erfindung betrifft ZrO₂-verstärkte Mullitfasern in Form von Endlosfilamenten mit einem Gehalt an mindestens 0,1 Gew.-% kristallinem ZrO₂ und einem Gehalt von mindestens 80% kristallinem Mullit, die sich im Vergleich zu nicht modifizierten Mullitfasern durch deutlich verbesserte mechanische Eigenschaften auszeichnen. Die Erfindung betrifft weiterhin ein Verfahren zur Herstellung solcher Fasern, in dem Verfahren als Zwischenprodukt hergestellte Grünfasern und die Verwendung der ZrO₂-verstärkten Mullitfasern in Faser-Matrix-Verbundwerkstoffen.

### Stand der Technik

Mullit ist ein in der Natur selten vorkommendes Mineral, das unter hohen Temperaturen und bei niedrigen Drücken gebildet wird. Es ist die einzige stabile binäre Verbindung des Systems Al₂O₃·SiO₂, In technischen Anwendungen stellt Mullit aufgrund seiner vorteilhaften Eigenschaften eine der wichtigsten Phasen in Keramiken dar und verfügt über ein breites Anwendungsspektrum. Zu diesen Eigenschaften zählen unter anderem eine hohe thermische Stabilität (bis zu Temperaturen oberhalb von 1700 °C), eine geringe Wärmeausdehnung und Wärmeleitfähigkeit, eine niedrige Dichte und eine für viele Anwendungen geeignete Festigkeit und Bruchzähigkeit. Mullitkeramiken zeichnen sich außerdem durch niedrige Kriechraten und gute Korrosionsbeständigkeit aus. Traditionell werden sie für Porzellan und Steinzeug, sowie als Feuerfestmaterialien in der Stahl-, Zement- und Chemieindustrie verwendet.

Neben den vorgenannten Vorteilen besteht ein wesentlicher Vorteil von Mullit darin, dass die Ausgangsmaterialien, aus denen Mullit gewonnen werden kann, in großen Mengen zu vergleichsweise geringen Kosten vorhanden sind, so dass Mullite in den letzten Jahren im Bereich der Hochleistungskeramiken eine wachsende Bedeutung erlangten. Applikationen, in denen Mullite vermehrt eingesetzt wurden, betreffen unter anderem monolithische Keramiken, deren typische Anwendungen unter anderem im Bereich der Feuerfestmaterialien und der Katalysatorträger liegen, Filme und Beschichtungen, um Materialdegradierung in oxidierenden Atmosphären zu unterbinden, sowie Mullitfasern, die als solche oder in keramischen Verbundwerkstoffen eingesetzt werden können.

Die EP 2 173 683 A1 beschreibt unter anderem die Verwendung von Mullitfasern zur Bildung von festen hochporösen Strukturen für Filtrationen, Isolierung und Hochtemperaturprozesse und chemische Reaktionen. Die DE 10 2008 004 532 A1 befasst sich mit Mullitfasern mit nanoskaliger Korngröße von bis zu 200 nm zur Verwendung in keramischen Verbundwerkstoffen.

CN 104 086 200 B offenbart ein Verfahren zur Herstellung von 1 Gew%ZrO2-verstärkten Mullitfasern.

WANG WEI ET AL: "Preparation and thermal stability of zirconia-doped mullite fibers via sol-gel method",PROGRESS IN NATURAL SCIENCE: MATERIALS INTERNATIONAL, Bd. 21, Nr. 2, 1. April 2011 (2011-04-01), Seiten 117-121 offenbart ein Verfahren zur Herstellung von ZrO₂-verstärkten Mullitfasern.

Bisher kommerziell verfügbare Mullitfasern, die zusätzlich noch einen Anteil an im Mullit dispergierten Korundkörnern enthalten, sind unter der Handelsbezeichnung Nextel 720^{®} erhältlich. Diese Fasern weisen eine sehr hohe Kriechbeständigkeit und Raumtemperatur-Zugfestigkeit auf, zeigen aber bei höheren Temperaturen einen signifikanten Abfall der Weibullfestigkeit. Reine Mullitfasern mit einer Zusammensetzung nahe einem stöchiometrischen 3:2 Mullit zeigen zwar geringere absolute Weibullfestigkeiten, aber eine deutlich geringere Abnahme der Weibullfestigkeit bei Temperaturen über 1000 °C.

Zirconiumdioxid (ZrOz) findet im Feuerfestbereich und als Funktionswerkstoff Anwendung. ZrOz existiert in drei Strukturmodifikationen, einer monoklinen Modifikation (m-ZrOz), die sich bei etwa 1170 °C in die tetragonale Modifikation (t-ZrOz) umwandelt, und eine kubische Modifikation (c-ZrOz), die sich bei etwa 2370 °C aus der tetragonalen Modifikation bildet.

ZrOz zeichnet sich durch eine niedrige Wärmeleitfähigkeit von 2 W/m·K bei 1000 °C aus (Al₂O₃ besitzt bei gleicher Temperatur eine Wärmeleitfähigkeit von 7 W/m·K). Weitere vorteilhafte Eigenschaften von ZrOz sind der hohe Schmelzpunkt im Bereich von 2680-2710 °C sowie seine sehr hohe Härte und Verschleißbeständigkeit. ZrO₂-Keramiken zählen daher zu den oxidischen Keramiken mit der größten Härte, die bisher synthetisiert wurden.

Ein Problem bei der Verwendung von ZrOz in Keramiken besteht häufig darin, dass solche Keramiken ein sehr ungünstiges Bruchverhalten aufweisen, was dadurch bedingt ist, dass ZrOz beim Übergang von der tetragonalen in die monokline Modifikation eine Volumenexpansion von 3-5 % zeigt. Diese Umwandlung tritt normalerweise bei Temperaturen unterhalb von etwa 950 °C auf.

Um diesen Umwandlungsprozessen entgegenzuwirken wurden in der Literatur zur Herstellung von Mullitkeramiken verschiedene Zusatzstoffe und Stabilisierungsmittel vorgeschlagen, wie beispielsweise der Zusatz von Y₂O₃ (sh. S. Prusty et al. Adv. Appl. Ceram. 2013, 110, S. 360-366). Zudem beschreibt Li et al in J. Ceram. Sci Technol. 2016, 7, S. 417-422 ein Spark Plasma Sintering Verfahren, mit dem 1-4 Gew.-% ZrOz in Mullitkeramiken inkorporiert werden konnten. Ein solches Verfahren wäre jedoch für die Herstellung von Keramikfasern nicht geeignet, da eine möglichst homogene Verteilung der ZrOz-Partikel im Mullitgefüge, die deren Kornwachstum hemmt, durch das in den Untersuchungen beobachtete stäbchenförmige ZrOz nicht erreicht werden kann.

Vor dem Hintergrund des vorstehend geschilderten Standes der Technik besteht ein Bedarf an Keramikfasern und insbesondere an Mullitfasern, die gegenüber den bekannten Mullitfasern ein verbessertes Festigkeitsprofil aufweisen und die insbesondere im Vergleich zu reinen Mullitfasern eine höhere Weibullfestigkeit und im Vergleich zu den angegebenen kommerziellen Fasern keinen starken Abfall der Weibullfestigkeit bei höheren Temperaturen zeigen. Die vorliegende Erfindung befasst sich mit diesem Bedarf.

### Beschreibung der Erfindung

Der vorliegenden Erfindung liegt die überraschende Erkenntnis zu Grunde, dass die angestrebte Verbesserung der Höchstzugkräfte und Höchstzugkraftdehnungen von Mullitfasern durch den Einbezug von ZrOz in die Fasern erreicht werden kann, wobei keine Verschlechterung anderer Eigenschaften beobachtet wurde. Derartige Fasern lassen sich durch Vermischen der für die Fasern benötigten Ausgangsstoffe, anschließendes Verspinnen zur Herstellung von Grünfasern, Kalzinieren und Sintern der Fasern herstellen, wobei mindestens anteilsmäßig kristallines ZrO₂ erhalten wird.

Gemäß einem ersten Aspekt betrifft die vorliegende Erfindung ZrO₂-verstärkte Mullitfasern in Form von Endlosfilamenten, die mindestens 0,1 Gew.-% kristallines ZrO₂ und mindestens 80 Gew.-% kristallinen Mullit enthalten.

"Mullit" bezeichnet in der hier beschriebenen Erfindung ein Mineral mit der chemischen Zusammensetzung Al^{[6]}Al₁₊ₓ^{[4]}[O|Si₁₋ₓO_{4-x/2}], wobei x ≈ 0,2 entspricht. Nach dem Herstellungsverfahren bezeichnet man synthetischen Mullit der Zusammensetzung 3 Al₂O₃ x 2 SiOz als Sintermullit und Mullit der Zusammensetzung 2 Al₂O₃ x 1 SiOz als Schmelzmullit. "Mullit", wie hier definiert, umfasst beide Varianten. In Bezug auf die angegebenen Verhältnisse ist klar, dass in Mullit kein freies Al₂O₃ oder SiOz vorliegt, zur vereinfachten Beschreibung der Verhältnisse von Al₂O₃ oder SiOz im Mullit wird dieses Verhältnis aber hier angegeben. Diese Verhältnisse bezeichnen Molverhältnisse.

Die Angabe "kristallines ZrO₂" gibt vor, dass zumindest ein Anteil des ZrO₂ in kristalliner Form in den Fasern vorliegt, wobei nicht ausgeschlossen ist, dass zusätzlich nicht-kristalline bzw. amorphe Anteile von ZrOz in den Mullitfasern enthalten sind. Das Vorliegen von kristallinem ZrO₂ kann über die hierfür charakteristischen Reflexe in Röntgendiffraktogrammen nachgewiesen werden.

Hinsichtlich des Gehalts an kristallinem ZrOz unterliegt die vorliegende Erfindung keinen relevanten Beschränkungen, wobei der Gehalt an kristallinem ZrOz einerseits so hoch liegen sollte, dass der verstärkende Effekt möglichst günstig ausgeprägt ist. Andererseits sollte der Anteil an ZrO₂ aber nicht so hoch sein, dass sich dies negativ auf die Gesamteigenschaften der Fasern auswirkt. Als bevorzugt für eine gute Ausprägung der verstärkenden Eigenschaften kann hier ein Anteil von mindestens 0,5 Gew.-%, bevorzugt mindestens 1 Gew.-%, und weiter bevorzugt mindestens 2 Gew.-%, noch weiter bevorzugt mindestens 3,1 Gew.-% und noch weiter bevorzugt mindestens 3,5 Gew.-% angegeben werden. Der Maximalgehalt an ZrO₂ sollte hier vorzugsweise 15 Gew.-% nicht übersteigen und in einer besonders bevorzugten Ausführungsform nicht größer als 10 Gew.-% betragen. Besonders günstige verstärkende Eigenschaften werden mit ZrO₂-Gehalten im Bereich von etwa 2 bis 15 Gew.-%, insbesondere von etwa 3 bis 10 Gew.-% und besonders bevorzugt von etwa 3,5 bis 10 Gew.-% an kristallinem ZrOz erreicht, die damit im Kontext der vorliegenden Erfindung besonders bevorzugt sind.

Innerhalb der vorliegenden Erfindung zugrundeliegenden Untersuchungen wurde gefunden, dass das ZrO₂ in den Fasern auch unterhalb der für die Umwandlung in monoklines ZrO₂ relevanten Temperatur von 950 °C zumindest weitgehend als tetragonales ZrO₂ vorliegt. Im Rahmen der Erfindung ist es daher bevorzugt, wenn das ZrO₂ in den ZrO₂-verstärkten Mullitfasern in der tetragonalen Modifikation enthalten ist.

Der Korngröße des ZrO₂ in der ZrO₂-verstärkten Mullitfaser kommt eine gewisse Bedeutung dahingehend zu, da bei einer hohen Korngröße die tetragonale Modifikation von ZrO₂ in unstabilisierter Form nicht hinlänglich stabil ist. Als besonders geeigneter Rahmen für die kristalline ZrOz-Korngrößen kann hier ein Bereich von etwa 10 bis 60 nm, insbesondere von etwa 20 bis 35 nm, angegeben werden. Die Korngrößenbestimmung erfolgt grafisch an mikroskopischen Aufnahmen thermisch geätzter Querschnittsflächen mittels Linienschnittverfahren in Anlehnung an DIN EN ISO 13383-1:2016-11. Anhand der bestimmten Korngrößen wird eine vorteilhaft homogene Verteilung des ZrOz in der Mullitfaser deutlich, die eine höhere Festigkeit der Faser begünstigt. Bevorzugt liegt die mittlere Korngröße des ZrOz in der ZrOz-verstärkten Mullitfaser innerhalb der vorstehend vorgegebenen Bereiche.

In den erfindungsgemäßen Endlosfilamenten beträgt der Anteil des kristallinen Mullits mindestens 80 Gew.-%, bevorzugt mindestens 85 Gew.-% und besonders bevorzugt 90 bis 97,5 Gew.-%. Mit derartigen Anteilen wird sichergestellt, dass die Gesamteigenschaften der erhaltenen Fasern den entsprechenden Eigenschaften von reinen Mullitfasern möglichst ähnlich sind. Das Verhältnis von Keramik-bildenden Al₂O₃- und SiOz-Präkursoren, aus denen der Mullit gebildet wird, ist zweckmäßig so einzustellen, dass sich bei der Verarbeitung der Präkursoren zu den Fasern ein möglichst hoher Mullitanteil in den Fasern ausbilden kann. Bevorzugt ist es hier, wenn die Mullitfasern, bezogen auf die Gesamtmenge von Al₂O₃ und SiO₂, etwa 71 bis 80 Gew.-%, insbesondere etwa 73 bis 78 Gew.-% und besonders bevorzugt etwa 75 bis 78 Gew.-% rechnerischen Al₂O₃-Anteil in der Mullitphase enthalten. Bei diesem Anteil werden, aufgrund des Bezugs auf die Mullitphase, zusätzlich vorliegendes ZrOz oder weitere keramische Bestandteile nicht berücksichtigt.

Die Korngröße des Mullits in der ZrOz-verstärkten Mullitfaser liegt zweckmäßig im Bereich von 50 bis 200 nm, insbesondere von etwa 80 bis 150 nm. Die Korngröße des Mullits ist dabei analog zur Bestimmung der Korngröße des ZrO₂ grafisch an mikroskopischen Aufnahmen thermisch geätzter Querschnittsflächen mittels Linienschnittverfahren in Anlehnung an DIN EN ISO 13383-1:2016-11. zu bestimmen. Die vergleichsweise geringe Korngröße des Mullits bedingt die für die erfindungsgemäßen ZrOz-verstärkten Mullitfasern gefundene hohe Festigkeit, die durch größere Mullitkörner beeinträchtigt wird. Bevorzugt liegt die mittlere Korngröße des Mullits in der ZrOz-verstärkten Mullitfaser innerhalb der vorstehend vorgegebenen Bereiche.

Neben Mullit und ZrOz können die erfindungsgemäßen ZrOz-verstärkten Mullitfasern weitere anorganische Bestandteile und Restphasen enthalten, insbesondere in Form von kristallinem Al₂O₃, das sich aus einem Überschuss an Keramik-bildendem Al₂O₃-Präkursor bei der Herstellung der Fasern bilden kann. In einer Ausführungsform ist eine solche Restphase und insbesondere eine Restphase aus Korund, erfindungsgemäß bevorzugt, da dadurch die mechanischen Eigenschaften der Mullitfasern weiter verbessert werden können.

Weitere Materialien, die zusätzlich zu Mullit und kristallinem ZrOz in den erfindungsgemäßen Mullitfasern enthalten sein können, sind z.B. Y₂O₃,Yb₂O₃, HfOz, CeOz, sowie andere Übergangsmetalloxide oder Oxide der Lanthanoide.

Die erfindungsgemäßen ZrOz-verstärkte Mullitfasern liegen in Form von Filamenten vor, die auch als Endlosfilamente oder Endlosfasern bezeichnet werden (d.h. Fasern mit praktisch unbegrenzter Länge, hier synonym verwendet). Die Fasern weisen einen Durchmesser von bevorzugt > 5 µm auf, um eine wünschenswerte Stabilität bereitstellen zu können. Ganz besonders bevorzugt ist ein Faserdurchmesser im Bereich von 7 bis 13 µm.

Die erfindungsgemäßen ZrO₂-verstärkten Mullitfasern zeichnen sich gegenüber bekannten Mullitfasern insbesondere durch eine verbesserte Höchstzugkraft und Höchstzugkraftdehnung im Biegezugversuch aus. Demzufolge weisen die erfindungsgemäßen ZrOz-verstärkten Mullitfasern bevorzugt eine Höchstzugkraft, bestimmt an einem Faserbündel von 468 Filamenten mit einer Dicke von etwa 10 µm bei einer Prüfgeschwindigkeit von 5 mm/min an einer fixierten Umlenkung mit einem Durchmesser von 2,5 mm, von mindestens 12,0 N, insbesondere von mindestens 14,0 N und besonders bevorzugt von mindestens 15,0 N auf. Zusätzlich oder alternativ weisen die Fasern Werte für die Höchstzugkraftdehnung von mindestens 1,5 %, insbesondere von mindestens 1,6 % und besonders bevorzugt von 2,0 % auf. Zu weitergehenden Details zur Bestimmung der Höchstzugkraft und Höchstzugkraftdehnung wird auf die Angaben im Beispielteil verwiesen.

Wie vorstehend erläutert, können die erfindungsgemäßen ZrOz-verstärkten Mullitfasern durch Vermischen der für die Fasern benötigten Ausgangsstoffe, anschließendes Verspinnen zur Herstellung von Grünfasern, Kalzinieren und Sintern der Fasern hergestellt werden. Demzufolge betrifft ein weiterer Aspekt der hier beschriebenen Erfindung ein Verfahren zur Herstellung von ZrO₂-verstärkten Mullitfasern mit folgenden Schritten:
(i) Herstellen einer Spinnlösung aus einem Keramik-bildenden SiOz-Präkursor, einem Keramik-bildendem Al₂O₃-Präkursor, einem wasserlöslichen organischen Polymer, einem Keramik-bildenden ZrOz-Präkursor und gegebenenfalls einem Stabilisator, wobei bei Verwendung eines Stabilisators dieser vorzugsweise als Lösung mit dem Keramik-bildenden ZrOz-Präkursor eingesetzt wird,
(ii) wenn erforderlich, teilweises Verdampfen von Wasser der Spinnlösung, um eine Spinnmasse mit einer Nullscherviskosität von mindestens 150 Pa·s, insbesondere im Bereich von 180 bis 350 Pa·s (bestimmt jeweils bei 25 °C) herzustellen,
(iii) Trockenspinnen der Spinnmasse unter Erhalt von Grünfasern,
(iv) Kalzinieren der Grünfasern unter Bildung anorganischer Präkursor-Fasern, wobei flüchtige Bestandteile pyrolytisch entfernt werden, und
(v) Sintern der anorganischen Präkursor-Fasern unter Mullit-Phasenbildung zu ZrOz-verstärkten Mullitfasern.

Im ersten Schritt (i) wird demzufolge eine Spinnlösung hergestellt, die alle Bestandteile der späteren Mullitfasern und zusätzlich eine oder mehrere wasserlöslich Polymere zur zwischenzeitlichen Stabilisierung der Grünfasern und gegebenenfalls einen Stabilisator zur Stabilisierung des Keramik-bildenden ZrO₂-Präkursors in der Spinnlösung enthält. Durch das in Schritt (iv) erfolgende Kalzinieren werden zunächst in den Grünfasern enthaltene anorganische und organische Bestandteile, wie insbesondere das Polymer, pyrolytisch entfernt, d.h. zu gasförmigen Abbauprodukten umgesetzt, die in den generierten Fasern nicht mehr enthalten sind.

Damit der Keramik-bildende ZrO₂-Präkursor stabilisiert werden kann, ist es vorteilhaft, den Stabilisator der Lösung des Keramik-bildenden ZrO₂-Präkursors zuzusetzen oder eine Stabilisatorlösung mit einer Lösung des Keramik-bildenden ZrOz-Präkursors zu vermischen.

Der Schritt (ii) ist optional, d.h. wenn z.B. die in Schritt (i) hergestellte Spinnlösung die in (ii) angegebene Nullscherviskosität bereits aufweist, kann dieser Schritt entfallen. Ziel des Schritts (ii) ist die Einstellung einer für ein Trockenverspinnen geeigneten Viskosität. Die Nullscherviskosität wird im Kontext der hier beschriebenen Erfindung bei 25 °C mit Platte-Platte Geometrie mit Plattendurchmesser 25 mm und Spaltabstand 0,5 mm bestimmt. Hierzu kann z.B. ein Physica MCR 301 Rheometer von Anton Paar verwendet werden.

Der Schritt (i) des vorstehend beschriebenen Verfahrens kann als Eintopfprozess durchgeführt werden, wobei eine Spinnlösung aus den angegebenen Bestandteilen durch Vermischen der Bestandteile mit Wasser erzeugt werden kann. Insbesondere dann, wenn ein Stabilisator für ZrO₂ in die Spinnlösung einbezogen werden soll, ist es sinnvoll, eine Vorlösung des Stabilisators und des Keramik-bildenden ZrO₂-Präkursor herzustellen und diese dann mit den anderen Bestandteilen der Spinnlösung zu vermischen.

Generell ist es zweckmäßig, zunächst eine Mischung der anorganischen Bestandteile der späteren Spinnlösung und gegebenenfalls des optionalen Stabilisators herzustellen und zu dieser das wasserlösliche organische Polymer oder eine wässrige Lösung davon zuzugeben. In einer ganz besonders bevorzugten Ausführungsform erfolgt das Herstellen der Spinnlösung in Schritt (i) über die Teilschritte:
(ia) Überführen eines Keramik-bildenden SiOz-Präkursors sowie eines Keramik-bildenden Al₂O₃-Präkursors unter Zugabe von Wasser in eine wässrige Mullit-Präkursor-Lösung und Überführen eines Keramik-bildenden ZrOz-Präkursors unter Zugabe von Wasser sowie gegebenenfalls eines Stabilisators in eine wässrige ZrO₂-Präkursor-Lösung,
(ib) Vereinen der gemäß Schritt (ia) hergestellten wässrigen Mullit-Präkursor-Lösung sowie der gemäß Schritt (ia) hergestellten wässrigen ZrOz-Präkursor-Lösung zu einer ZrOz-Mullit-Präkursor-Lösung,
(ic) Versetzen der im Schritt (ib) gebildeten wässrigen ZrOz-Mullit-Präkursor-Lösung mit einem wasserlöslichen organischen Polymer unter Bildung einer wässrigen Spinnlösung.

Zur Unterstützung der Kristallisation können der in Schritt (i) oder in einem der in Schritt (ia) bis (ic) des Verfahrens hergestellten Lösung Mullitkristallisationskeime, z.B. als wässrige Suspension, zugegeben werden.

Der Keramik-bildende ZrOz-Präkursor unterliegt im Rahmen der vorliegenden Erfindung keinen relevanten Beschränkungen, mit der Maßgabe, dass dieser im Rahmen der Verarbeitung im Verfahren möglichst rückstandsfrei zu ZrOz umsetzbar sein sollte. Der Keramik-bildenden ZrOz-Präkursor sollte daher keine Bestandteile enthalten, die im Rahmen der Verarbeitung (unter oxidativen Bedingungen) nicht zu gasförmigen Produkten umgesetzt werden können. Zu gasförmigen Produkten umgesetzt werden können z.B. Halogenide über die Umwandlung in Halogenwasserstoffe.

Bei dem Keramik-bildenden ZrOz-Präkursor handelt es sich bevorzugt um eine Zirconiumverbindung der Formel Zr(O)ₒX₍₄₋₂ₒ₎, wobei o = 0 - 2 und X ein Halogenidion, ein organisches Anion, vorzugsweise Alkoholat, oder NO₃- darstellt und wobei die Zirconiumverbindung bei o = 2 als Zirconiumoxid-Sol vorliegt. Besonders geeignete Halogenidionen sind Br⁻ und Cl⁻, von denen Cl⁻ ganz besonders bevorzugt ist.

Ein besonders bevorzugter Keramik-bildender ZrO₂-Präkursor ist z.B. Zirconiumdichloridoxid (ZrOCl₂) und insbesondere das Octahydrat von Zirconiumdichloridoxid.

Wie vorstehend angegeben sind für die erfindungsgemäßen ZrO₂-verstärkten Mullitfasern Anteile von etwa 2 bis 15 Gew.-% an ZrOz, insbesondere von etwa 3 bis 10 Gew.-% und besonders bevorzugt von etwa 3,5 bis 10 Gew.-%. Entsprechend ist es für das hier beschriebene Verfahren bevorzugt, wenn die ZrOz-Mullit-Präkursorlösung Keramik-bildenden ZrOz-Präkursor in einer Menge enthält, die etwa 2 bis 15 Gew.-%, insbesondere von etwa 3 bis 10 Gew.-% und besonders bevorzugt von etwa 3,5 bis 10 Gew.-%, bezogen auf die Gesamtmenge an aus der Präkursorlösung zu bildenden Phasen aus ZrOz, Al₂O₃ und Mullit, entspricht. Aufgrund der in den Keramik-bildenden ZrOz-Präkursoren enthaltenen unterschiedlichen Gegenionen oder Kristallwasser, kann die Menge des Präkursors daher für die Herstellung von ZrOz-verstärkten Mullitfasern in gewissen Bereichen variieren. Der Fachmann ist jedoch nach Festlegung auf einen bestimmten ZrOz-Präkursor ohne weiteres in der Lage, diese Menge so abzustimmen, dass sich in der Keramikfaser der gewünschte ZrOz-Gehalt einstellt.

Auch der wasserlösliche Al₂O₃-Präkursor unterliegt im Kontext der Erfindung zunächst nur der Beschränkung einer möglichst rückstandsfreien Umsetzbarkeit zu Al₂O₃ (während des Kalzinierens), aus dem sich in der Reaktion mit SiOz während des Sinterns Mullit bilden kann. Als besonders geeignete wasserlösliche Al₂O₃-Präkursoren können hier aber Aluminiumsalze der Formel Alₙ(OH)ₘX₍₃ₙ₋ₘ₎ angegeben werden, wobei X ein Halogenidion, NO₃⁻ oder ein organisches Anion, z.B. ein Alkoholat, ist und wobei n = 1 oder 2 und m = 0 - 5 ist. Ein besonders bevorzugtes Ion X ist ein Halogenidion und insbesondere Cl⁻. Ein ganz besonders bevorzugter wasserlöslicher Al₂O₃-Präkursor ist Al₂(OH)₅Cl, insbesondere mit 2,5 Einheiten H₂O.

Für die erfindungsgemäßen ZrO₂-verstärkten Mullitfasern ist ein möglichst hoher Mullitanteil bevorzugt. Entsprechend ist es bevorzugt, wenn die Mullit-Präkursorlösung im oben beschriebenen Verfahren wasserlöslichen Al₂O₃-Präkursor in einer Menge enthält, die etwa 71 bis 80 Gew.-%, bevorzugt etwa 73 bis 78 Gew.-% und insbesondere etwa 75 bis 78 Gew.-%, bezogen auf die Gesamtmenge an aus der Präkursorlösung zu generierenden rechnerischen Al₂O₃- und SiOz-Anteilen in der Mullitphase, entspricht. Die Angabe "rechnerisch" trägt hier dem Umstand Rechnung, dass Al₂O₃ und SiOz in der Mullitfaser als Mullit und nicht "Al₂O₃" und "SiO₂" als solches enthalten sind.

Der wasserlösliche SiO₂-Präkursor unterliegt im Prinzip den gleichen Beschränkungen wie der Al₂O₃-Präkursor. Besonders geeignete wasserlösliche SiOz-Präkursoren sind kolloidales Siliziumdioxid oder eine wasserlösliche oder dispergierbare Si-haltige organische Verbindung wie ein Silan, Aminosilan oder Orthokieselsäureester.

Für die Herstellung von Fasern mit hohem Mullit-Anteil ist es bevorzugt, wenn die Mullit-Präkursorlösung wasserlöslichen SiOz-Präkursor in einer Menge enthält, die etwa 20 bis 28 Gew.-%, insbesondere etwa 22 bis 27 Gew.-% und besonders bevorzugt etwa 23 bis 25 Gew.-%, bezogen auf die Gesamtmenge an aus der Präkursorlösung zu bildenden rechnerischen Al₂O₃- und SiOz-Anteilen in der Mullitphase, entspricht. Für die Angabe "rechnerisch" gilt das für den entsprechenden Al₂O₃-Anteil Erläuterte.

Das wasserlösliche organische Polymer dient im hier beschrieben Verfahren vor allem als temporäres Bindemittel für die anorganischen Komponenten in den zunächst generierten Grünfasern und als die Viskosität steigerndes Mittel für das Verspinnen. Da das Polymer in den Keramikfasern nicht mehr enthalten ist, ist die Struktur des Polymers an sich für das Verfahren nicht wesentlich. Als besonders geeignete wasserlösliche organische Polymere können z.B. Poly(vinylpyrrolidon), Poly(vinylalkohol), und/oder Poly(ethylenoxid) eingesetzt werden, von denen Poly(vinylpyrrolidon) besonders geeignet ist. Mit dem Polymer wird zudem eine für das Verspinnen unerwünschte Gelbildung vermieden.

Die Menge des in die Spinnlösung einzubeziehenden wasserlöslichen organischen Polymers ist vorzugsweise so zu wählen, dass die gewünschte Viskosität erreicht und eine ausreichende Stabilisierung der Grünfasern bis zur weiteren Verarbeitung sichergestellt ist. Ein zu hoher Anteil ist daher aus Kostengründen und, weil sich bei größeren Polymeranteilen eine größere Schrumpfung der Fasern während des Kalzinierens ergibt, zu vermeiden. Als günstig kann ein Gewichts-Verhältnis von Polymer zum Gesamtoxidgehalt in der Spinnlösung von 20:80 bis 40:60 und insbesondere 25:75 bis 30:70 angegeben werden.

Eine vorteilhafte Steuerung der Viskosität und Stabilisierung der Grünfaser kann durch eine geeignete Wahl des Molekulargewichts des wasserlöslichen Polymers erzielt werden. Besonders zweckmäßig ist es hierbei, wenn ein Polymer mit einem Molekulargewicht M_{w} von weniger als 200.000 g/mol und bevorzugt im Bereich von etwa 20.000 bis 70.000 g/mol verwendet wird. Besonders vorteilhaft ist die Verwendung eines Gemischs an wasserlöslichen Polymeren mit unterschiedlichem Molekulargewicht, wobei ein erstes Polymer mit einem Molekulargewicht M_{w} von weniger als 200.000 g/mol, insbesondere im Bereich von etwa 20.000 bis 70.000 g/mol, und ein zweites Polymer mit einem Molekulargewicht M_{w} von mehr als 1.000.000 g/mol verwendet wird. Ein besonders bevorzugtes zweites Polymer weist ein Molekulargewicht M_{w} im Bereich von 1.100.000 bis 1.500.000 g/mol auf. Ein besonders bevorzugtes Material für das erste und gegebenenfalls das zweite Polymer ist Poly(vinylpyrrolidon). Die jeweiligen Molekulargewichte sind hier mittels GPC unter Verwendung geeigneter Standards (z.B. Poly(styrol)) zu bestimmen.

Bei dem Stabilisator für den ZrO₂-Präkursor, der in der Spinnlösung und in der wässrigen ZrO₂-Präkursor-Lösung vorzugsweise verwendet wird, handelt es sich zweckmäßigerweise um eine Carbonsäure, die bevorzugt aus der Gruppe umfassend Glycin, Serin, Cystein, Oxalsäure, Malonsäure, Glutarsäure, Adipinsäure, Essigsäure, Glycolsäure, Milchsäure, Weinsäure, und/oder Zitronensäure ausgewählt ist. Ganz besonders bevorzugte Stabilisatoren sind Glycin und Serin.

Das Kalzinieren in Schritt (iv) des vorstehend beschriebenen Verfahrens wird bei einer Temperatur durchgeführt, bei der die jeweiligen Präkursoren von ZrOz, Al₂O₃ und SiOz in die jeweiligen Oxide umgewandelt werden, bei der sich aber der im Endeffekt zu generierende Mullit noch nicht bildet. Darüber hinaus werden im Rahmen des Kalzinierens flüchtige Bestandteile (d.h. insbesondere Polymer und eventuell vorhandener Stabilisator) pyrolytisch entfernt. Für die Umwandlungen vorteilhafte Temperaturen, die daher für den Schritt (iv) bevorzugt sind, liegen im Bereich von etwa 700 bis 1000 °C, und insbesondere etwa 850 bis 900 °C.

Da das Kalzinieren und möglichst vollständige pyrolytische Entfernen der flüchtigen Bestandteile in der Regel einige Zeit in Anspruch nimmt, können 240 bis 600 min und insbesondere 300 bis 400 min als geeigneter Zeitraum für diesen Schritt angegeben werden. Für das Kalzinieren kann zweckmäßig ein Durchlaufofen genutzt werden.

Das Sintern und die darin induzierte Umwandlung der anorganischen Präkursor-Fasern in die Mullitfasern finden bei im Vergleich zum Kalzinieren höheren Temperaturen in einem Rohrofen statt, vorzugsweise bei einer Temperatur im Bereich von etwa 1200 bis 1600 °C und insbesondere etwa 1300 bis 1500 °C. Da diese Umwandlung in der Regel relativ schnell abläuft, ist es meist ausreichend, wenn die anorganischen Präkursor-Fasern diesen Bedingungen vorzugsweise für einen Zeitraum von 60 bis 400 sec und insbesondere von 180 bis 300 sec ausgesetzt werden.

In den der hier beschriebenen Erfindung zugrundeliegenden Untersuchungen wurde gefunden, dass sich die über das vorstehend beschriebene Verfahren hergestellten ZrO₂-verstärkten Mullitfasern durch eine günstig gleichmäßige Verteilung der ZrO₂-Phase in den Fasern auszeichnen, was auch bei höheren Anteilen von ZrOz (insbesondere 3 Gew.-% oder mehr) beobachtet wurde. Gleichzeitig wiesen diese ZrOz-verstärkten Mullitfasern vorteilhafte mechanische Eigenschaften, wie insbesondere hohe Höchstzugkraft- und Höchstzugkraftdehnungswerte auf. Es liegt nahe, dass beide Beobachtungen im Zusammenhang stehen. Entsprechend betrifft ein weiterer Aspekt der hier beschriebenen Erfindung ZrOz-verstärkte Mullitfasern, die nach den vorstehend beschriebenen Verfahren herstellbar sind oder hergestellt wurden.

Darüber hinaus vermittelt das vorstehend beschriebene Verfahren den Vorteil, dass der Mullit erst bei höheren Temperaturen von >1200°C gebildet wird (im Vergleich zur Herstellung aus einem molekulardispersen Präkursorsystem). Dies wirkt sich dahingehend aus, dass sich das Material stärker verdichtet, bevor sich der kriechbeständige Mullit bildet. Bei einer Bildung von Mullit schon bei niedrigeren Temperaturen (z.B. etwa 1000°C) bildet sich hingegen der Mullit früher und wirkt dann einer Verdichtung des Materials entgegen, was sich meist in der Bildung von Poren und damit einhergehend ungünstigeren mechanischen Eigenschaften auswirkt.

Gemäß einem weiteren Aspekt betrifft die vorliegende Erfindung keramikbildende Grünfasern in Form von Filamenten, wie sie nach den Verfahrensschritten (i) bis (iii) des vorstehend beschriebenen Verfahrens erhältlich sind oder erhalten werden. Die Formulierung "keramikbildend" bezeichnet hier die Eignung der Grünfasern für eine spätere Umwandlung in Keramikfasern.

In einem noch weiteren Aspekt betrifft die vorliegende Erfindung die Verwendung der vorstehend beschrieben ZrO₂-verstärkten Mullitfasern in Faser-Matrix-Verbundwerkstoffen, d.h. in Werkstoffen in denen die Fasern in ein umgebendes Matrixmaterial eingebunden sind. Als Matrixmaterialien kommen dabei insbesondere polymere, metallische oder keramische Materialien in Betracht, von denen metallische und keramische Materialien auf Grund ihrer höheren Temperaturbeständigkeit bevorzugt sind. Durch die erfindungsgemäßen ZrO₂-verstärkten Mullitfasern kann den Faser-Matrix-Verbundwerkstoffen insbesondere eine verbesserte Festigkeit, Steifigkeit und/oder Hochtemperaturstabilität vermittelt werden. Die Verwendung beinhaltet in der Regel eine Infiltration der ZrOz-verstärkte Mullitfasern oder der daraus hergestellten textilen Flächen mit flüssigem oder verflüssigtem Matrixmaterial oder eines Vorläufers davon und das Verfestigen des Gemischs.

Im Folgenden wird die vorliegende Erfindung anhand von Beispielen näher erläutert, die jedoch nur zu illustrativen Zwecken gedacht und nicht als beschränkend für den Schutzumfang der Anmeldung aufzufassen sind.

### Beispiele

Die mechanischen Eigenschaften der in den folgenden Beispielen hergestellten Fasern wurden wie folgt bestimmt:
Zugfestigkeit und E-Modul der Fasern wurden mit einem Favimat der Firma Textechno bestimmt. Dazu wurden Einzelfilamente mit einer Einspannlänge von 25 mm zwischen zwei Abzugsklemmen eingespannt und deren Resonanzfrequenz nach Erreichen der Vorspannung von 0,25 cN/tex gemessen. Hierzu wurde das im Prüfgerät integrierte Vibrationsverfahren genutzt, das mithilfe der Resonanzfrequenz die lineare Dichte der Faser berechnet, aus der dann der Faserdurchmesser ermittelt wurde. Die Belastung der Einzelfilamente erfolgte bei einer Prüfgeschwindigkeit von 1 mm/min. Die zum Messgerät gehörige Software wurde zur Auswertung der Zugversuche verwendet. Für die Auswertung wurden mindestens 30 gültige Messungen verwendet. Die Zugfestigkeiten wurden aus dem arithmetischen Mittel der Einzelzugfestigkeiten bestimmt und die Weibullfestigkeiten und der Weibullmodul berechnet.

Biegezugversuche an beschlichteten Faserbündeln mit 468 Filamenten wurden an einer Zwick/Roell Universalprüfmaschine (Z010) durchgeführt. Zur Auswertung wurde die Software testXpert^{®}II verwendet. Die Faserbündel wurden über eine fixierte Umlenkung mit definierten Durchmessern von 2,0, 2,25 und 2,5 mm gebogen und an einer Halterung befestigt. Die Einspannlänge betrug 10 cm, die Vorkraft 40 cN. Die Faserbündel wurden mit einer Prüfgeschwindigkeit von 5 mm/min gestreckt und die maximale Höchstzugkraft und Höchstzugkraftdehnung bis zum Bruch an der Umlenkung gemessen. Die Mittelwerte der Höchstzugkräfte und Höchstzugkraftdehnungen wurden jeweils aus mindestens 15 Messungen gebildet.

### Beispiel 1: Faserherstellung über Wickelversuche

### Herstellung der Spinnlösung:

In einem Becherglas wurden Locron L^{®} als 50 Gew.-%ige Lösung von Al₂(OH)₅Cl·2,5 H₂O in Wasser als Al₂O₃-Präkursor und Levasil^{®} als 30 Gew.-%ige Lösung von SiOz-Partikeln als SiOz-Präkursor vorgelegt. Des Weiteren wurden, bezogen auf die Menge an Locron L^{®}, 6 Gew.-% einer 5 Gew.-%igen wässrigen Mullitkeimsuspension zugegeben. In einem zweiten Becherglas wurden unterschiedliche Mengen an Zirconiumdichloridoxidoctahydrat ZrOCl₂·8 H₂O unter Rühren in demineralisiertem Wasser gelöst und gegebenenfalls bis zu 1 Äquivalent des Stabilisators, bezogen auf die Menge an Zirconiumdichloridoxidoctahydrat, zugegeben. Die Lösung wurde einige Minuten weiter gerührt, um ein vollständiges Lösen des Stabilisators zu gewährleisten. Die Präkursor-Lösungen wurden vereinigt. Niedermolekulares PVP K30 (Sigma Aldrich) wurde im Verhältnis von 95:5 Gew.-% mit hochmolekularem PVP (Sigma Aldrich, M_{w} ~ 1.300.000) unter Rühren zugegeben. Die Spinnlösungen wurden mit einem KPG-Rührer bei Raumtemperatur weitergerührt, bis eine homogene Spinnlösung erhalten wurde.

Für die Herstellung der Fasern wurden die Mengen der Präkursoren für Al₂O₃ und SiOz so eingestellt, dass sich während der Verarbeitung ein Al₂O₃/SiO₂-Molverhältnis von 3:2 einstellt. Das Gewichtsverhältnis von Oxid zu Polymer in den Spinnmassen betrug 70:30.

### Herstellung der Spinnmasse:

Die erhaltene Spinnlösung wurde bei vermindertem Druck und unter langsamer Rotation am Rotationsverdampfer eingeengt, bis eine bei Raumtemperatur viskose Spinnmasse (Nullscherviskosität η₀ von 222 Pa·s bei 25 °C, bestimmt mit einem Physica MCR 301 Rheometer von Anton Paar mit Platte-Platte Geometrie mit Plattendurchmesser 25 mm und Spaltabstand 0,5 mm) erhalten wurde.

Die so hergestellten Spinnmassen wurden in Wickelversuchen getestet. Dazu wurden wenige Gramm der Spinnmasse auf ein Uhrglas gegeben. Ein daraus vertikal nach oben gezogener Faden wurde auf eine Spule gelegt, die über einen Wickler angetrieben wurde. Der Abstand zwischen der Spinnmasse und dem Kern der Spule betrug 82 cm. Anschließend wurde die maximal mögliche Wickelgeschwindigkeit sowie die Zeit bis zum Abriss des Fadens bestimmt.

Die Ergebnisse diese Bestimmungen sowie der ZrOz Anteil der jeweiligen Spinnmassen sind in der folgenden Tabelle 1 wiedergegeben:

**Tabelle 1**

| Anteil ZrO₂ [Gew.-%] | Äquivalente Stabilisator | η₀ [Pa·s] | Gesamtoxidgehalt [Gew.-%] | Max. Wickelgeschwindigkeit [m/min] |
|---|---|---|---|---|
| 1,0 | - | 223 | 31,8 | 22 |
| 3,0 | - | 202 | 31,3 | 22 |
| 3,0 | 0,3¹ | 202 | 31,1 | 22 |
| 5,0 | - | 200 | 32,2 | 16 |
| 7,0 | 0,5² | 246 | 32,6 | 22 |
| 15,0 | 1,0¹ | 239 | 36,3 | 22-27,5 |

| | | | | |
|---|---|---|---|---|
| ¹ = Glycin, ² = Zitronensäure | | | | |

Aus Tabelle 1 wird ersichtlich, dass mit verschiedenen ZrO₂-Anteilen zufriedenstellende Wickelgeschwindigkeiten erreicht werden können. Bei einem Zusatz von Glycin lassen sich insbesondere bei sehr hohen ZrOz-Vorläufergehalten sogar im Vergleich zu niedrigeren Gehalten noch verbesserte Wickelgeschwindigkeiten realisieren.

### Beispiel 2:

### Herstellung der Spinnlösung und Spinnmasse:

Analog Beispiel 1 wurde eine Spinnmasse mit einer Menge der Präkursoren für Al₂O₃ und SiO₂ hergestellt, die so eingestellt ist, dass sich während der Verarbeitung ein Al₂O₃/SiO₂-Molverhältnis von 3:2 einstellt. Das Gewichtsverhältnis von Oxid zu Polymer in den Spinnmassen betrug 70:30, der Anteil an ZrO₂, bezogen auf die Al- und Si-Oxide, 3 Gew.-%. Das Verhältnis von niedermolekularem PVP K30 zu hochmolekularem PVP betrug 95:5 Gew.-%. Die Spinnmasse wurde auf eine Nullscherviskosität von 222 Pa·s bei 25 °C, bestimmt mit einem Physica MCR 301 Rheometer von Anton Paar mit Platte-Platte Geometrie mit Plattendurchmesser 25 mm und Spaltabstand 0,5 mm, eingestellt.

### Herstellung der Grünfasern:

Die Spinnmassen wurden unter Druck mit einer Spinnpumpe mit einem Fördervolumen von 2,4 cm³/U über eine 468-Loch-Düsenplatte extrudiert. Die Durchmesser der Düsenlöcher betrugen jeweils 100 µm, die Kanallängen 200 µm. Das Abziehen der Filamentbündel erfolgte senkrecht nach unten durch einen beheizten Spinnschacht. Im Anschluss wurden die Fasern mit einer Geschwindigkeit von bis zu 160 m/min aufgenommen. Vor der Aufnahme der Endlosfilamente wurde eine Spinnpräparation aufgetragen, um einen Fadenschluss der Einzelfilamente zu erreichen. Die erhaltenen Grünfasern wurden bei definierter Temperatur und relativer Luftfeuchtigkeit (22 °C, 36-38 % r.F.) gelagert.

Die hergestellten Grünfasern wiesen einen Wassergehalt im Bereich von 16 bis 18 Gew.-% auf. Der Wassergehalt wurde über eine Karl-Fischer-Titration durch Verdampfung bei 140 °C bestimmt.

### Herstellung der Keramikfasern:

Die hergestellten Grünfasern wurden zunächst kontinuierlich in einem Durchlaufofen bei Temperaturen im Bereich von 700-1000 °C für einen Zeitraum von 320 min kalziniert. Anschließend wurden die kalzinierten Fasern in einem 4 m langen Rohrofen bei Temperaturen im Bereich von 1200-1600 °C bei einer Durchlaufgeschwindigkeit von 2,5 m/min bzw. 2 m/min in Keramikfasern überführt. Die Verweilzeit der Fasern im Sinterofen betrug etwa 1,6 min.

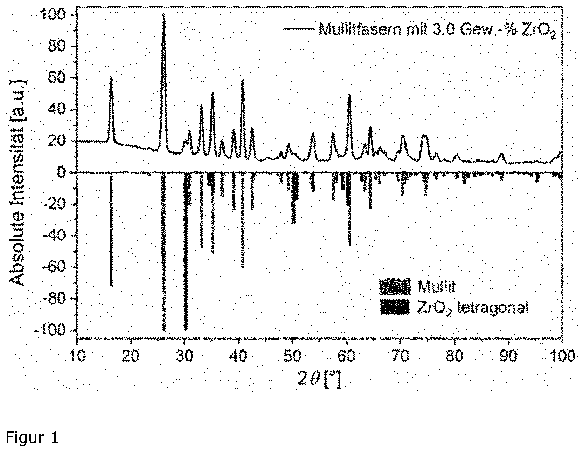

Ein Röntgendiffraktogramm der so erhaltenen Fasern ist in Figur 1 dargestellt. Alle detektierten Reflexe konnten mithilfe von Literaturdiffraktogrammen zugeordnet werden. Als Hauptphase kann anhand der charakteristischen Reflexe hoher Intensität bei 2θ = 16,4, 25,9, 26,2, 40,8 und 60,5° Mullit identifiziert werden. Der für die tetragonale Modifikation von ZrO₂ charakteristische Reflex mit der höchsten Intensität bei 2θ = 30,2°, der bei monoklinem und kubischen ZrOz fehlt, wurde ebenfalls detektiert.

Für die so erhaltenen Fasern wurden die jeweiligen Weibullfestigkeiten σ₀, die relativen Weibullfestigkeiten σ_{0,rel}, die Weibullmoduli (m) und die E-Moduli bestimmt. Die Ergebnisse dieser Untersuchungen sind in der folgenden Tabelle 2 wiedergegeben. Zum Vergleich sind die entsprechenden Werte reiner Mullitfasern (d.h. ohne ZrO₂) angegeben:

**Tabelle 2**

| T [°C] | σ₀ [MPa] | σ_{0,rel} [%] | m | E-Modul [GPa] |
|---|---|---|---|---|
| Durchlaufgeschwindigkeit 2,5 m/min | | | | |
| RT | 1359 | 100 | 11,8 | 200 |
| 1000 | 1340 | 99 | 5,6 | 196 |
| 1200 | 1316 | 97 | 6,1 | 209 |
| 1300 | 1225 | 90 | 5,8 | 217 |

| Durchlaufgeschwindigkeit 2,0 m/min | | | | |
|---|---|---|---|---|
| RT | 1378 | 100 | 7,2 | 202 |
| 1000 | 1394 | 101 | 6,1 | 203 |
| 1200 | 1254 | 91 | 5,8 | 194 |
| 1300 | 1361 | 99 | 6,3 | 212 |

| Reine Mullitfaser (Vergleich), Durchlaufgeschwindigkeit 2,5 m/min | | | | |
|---|---|---|---|---|
| RT | 1323 | 100 | 9,5 | 191 |
| 1000 | 1320 | 100 | 6,5 | 204 |
| 1200 | 1276 | 96 | 8,0 | 212 |
| 1300 | 1232 | 93 | 6,7 | 197 |

Der Vergleich der verschiedenen Fasern zeigt für die ZrO₂-haltigen Fasern äquivalente bis leicht verbesserte mechanische Eigenschaften.

Die Ergebnisse der Biegezugversuche sind in der folgenden Tabelle 3 wiedergegeben:

**Tabelle 3**

| Durchmesser Umlenkung [mm] | Höchstzugkraft [N] | | Höchstzugkraftdehnung [%] | |
|---|---|---|---|---|
| | Reine Mullitfaser (Vergleich) | Mullitfaser mit 3,0 Gew.-% ZrO₂ | Reine Mullitfaser (Vergleich) | Mullitfaser mit 3,0 Gew.-% ZrO₂ |
| 2,0 | 6,3±1,2 | 10,9±1,5 | 0,7±0,2 | 1,2±0,2 |
| 2,25 | 8,4±1,4 | 12,2±2,3 | 0,8±0,2 | 1,3±0,4 |
| 2,5 | 11,6±2,1 | 16,9±1,8 | 1,3±0,4 | 2,0±0,3 |

Wie aus Tabelle 3 ersichtlich ist, zeichnen sich die ZrO₂-verstärkten Mullitfasern im Vergleich zu den Fasern ohne ZrO₂ durch deutlich verbesserte mechanische Eigenschaften (Höchstzugkräfte und Höchstzugkraftdehnungen) aus. Diese wirken sich unter anderem positiv auf die textile Verarbeitbarkeit der Fasern aus. Die erhöhten Höchstzugkräfte und Höchstzugkraftdehnungen resultieren in einer deutlich erhöhten Brucharbeit.

## Patentansprüche

1. ZrOz-verstärkte Mullitfasern in Form von Endlosfilamenten, **dadurch gekennzeichnet, dass** sie mindestens 0,1 Gew.-% kristallines ZrO₂ enthalten, wobei die ZrO₂-verstärkten Mullitfasern mindestens 80 Gew.-% kristallinen Mullit enthalten.

2. ZrOz-verstärkte Mullitfasern nach Anspruch 1, **dadurch gekennzeichnet, dass** die Fasern einen Durchmesser im Bereich von > 5 µm und insbesondere im Bereich von 7 bis 13 µm aufweisen.

3. ZrOz-verstärkte Mullitfasern nach Anspruch 1 oder 2, **dadurch gekennzeichnet, dass** sie 3 bis 15 Gew.-% und bevorzugt 3 bis 10 Gew.-% kristallines ZrO₂, ganz besonders bevorzugt in tetragonaler Modifikation, enthalten.

4. ZrOz-verstärkte Mullitfasern gemäß mindestens einem der Ansprüche 1 bis 3, **dadurch gekennzeichnet, dass** sie mindestens 85 Gew.-% und besonders bevorzugt 90 bis 97,5 Gew.-% kristallinen Mullit enthalten, und/oderdass das kristalline ZrO₂ Korngrößen in dem Bereich von 10 bis 60 nm, insbesondere von 20 bis 35 nm, aufweist.

5. ZrOz-verstärkte Mullitfasern gemäß mindestens einem der vorhergehenden Ansprüche, **dadurch gekennzeichnet, dass** sie, bezogen auf die Gesamtmenge von Al₂O₃ und SiO₂, 71 bis 80 Gew.-%, insbesondere 73 bis 78 Gew.-% und besonders bevorzugt 75 bis 78 Gew.-% rechnerischen Al₂O₃-Anteil in der Mullitphase enthalten.

6. ZrOz-verstärkte Mullitfasern nach mindestens einem der vorhergehenden Ansprüche, **dadurch gekennzeichnet, dass** die Restphase kristallines Al₂O₃ enthält oder daraus besteht.

7. ZrOz-verstärkte Mullitfasern nach mindestens einem der vorhergehenden Ansprüche, **dadurch gekennzeichnet, dass** sie eine Höchstzugkraft von mindestens 12,0 N, bevorzugt von mindestens 14,0 N und insbesondere von mindestens 15,0 N und/oder eine Höchstzugkraftdehnung von mindestens 1,5 %, insbesondere von mindestens 1,6 % und besonders bevorzugt von 2,0±0,3 % aufweisen, jeweils bestimmt an einem Faserbündel von 468 Filamenten mit einer Dicke von 10 µm bei einer Prüfgeschwindigkeit von 5 mm/min an einer fixierten Umlenkung mit einem Durchmesser von 2,5 mm.

8. Verfahren zur Herstellung von ZrO₂-verstärkten Mullitfasern nach mindestens einem der Ansprüche 1 bis 7, **dadurch gekennzeichnet, dass**
(i) eine Spinnlösung aus einem Keramik-bildenden SiO₂-Präkursor, einem Keramik-bildendem Al₂O₃-Präkursor, einem wasserlöslichen organischen Polymer, einem Keramik-bildenden ZrO₂-Präkursor und gegebenenfalls einem Stabilisator hergestellt wird, wobei bei Verwendung eines Stabilisators dieser insbesondere als Lösung mit dem Keramik-bildenden ZrO₂-Präkursor eingesetzt wird,
(ii) das Wasser der Spinnlösung, wenn erforderlich, teilweise verdampft wird, um eine Spinnmasse mit einer Nullscherviskosität von mindestens 150 Pa.s, insbesondere im Bereich von 180 bis 350 Pa·s, bestimmt jeweils bei 25 °C, herzustellen, wobei die Nullscherviskosität mit Platte-Platte Geometrie mit Plattendurchmesser 25 mm und Spaltabstand 0,5 mm bestimmt wird,
(iii) die Spinnmasse unter Erhalt von Grünfasern einem Trockenspinnprozess unterworfen wird,
(iv) die Grünfasern unter Bildung anorganischer Präkursor-Fasern kalziniert werden, wobei flüchtige Bestandteile pyrolytisch entfernt werden, und
(v) die anorganischen Präkursor-Fasern unter Mullit-Phasenbildung zu ZrO₂-verstärkten Mullitfasern gesintert werden.

9. Verfahren nach Anspruch 8, **dadurch gekennzeichnet, dass** der wasserlösliche ZrO₂-Präkursor ein Zirconiumverbindung der Formel Zr(O)ₒX₍₄₋₂ₒ₎ darstellt, wobei o = 0 - 2 und X ein Halogenidion, ein organisches Anion, vorzugsweise Alkoholat, oder NO₃⁻ darstellt und wobei die Zirconiumverbindung bei o = 2 als Zirconiumoxid-Sol vorliegt, und/oder dass die ZrO₂-Mullit-Präkursorlösung wasserlöslichen ZrO₂-Präkursor in einer Menge enthält, die 2 bis 15 Gew.-% und insbesondere 3 bis 10 Gew.-% ZrO₂, bezogen auf die Gesamtmenge an aus der Präkursorlösung zu bildenden Phasen aus ZrO₂, Al₂O₃ und Mullit, entspricht.

10. Verfahren nach mindestens einem der Ansprüche 8 oder 9, **dadurch gekennzeichnet, dass** der wasserlösliche Al₂O₃-Präkursor ein Aluminiumsalz der Formel Alₙ(OH)ₘX₍₃ₙ₋ₘ₎ darstellt, wobei X ein Halogenidion, NO₃⁻ oder ein organisches Anion, vorzugsweise Cl⁻ darstellt und wobei n = 1 oder 2 und m = 0-5, und/oder dass die Mullit-Präkursorlösung wasserlöslichen Al₂O₃-Präkursor in einer Menge enthält, die 71 bis 80 Gew.-%, insbesondere etwa 73 bis 78 Gew.-% und besonders bevorzugt 75 bis 78 Gew.-%, bezogen auf die Gesamtmenge an aus der Präkursorlösung zu generierenden rechnerischen Al₂O₃- und SiOz-Anteilen in der Mullitphase, entspricht.

11. Verfahren nach mindestens einem der Ansprüche 8 bis 10, **dadurch gekennzeichnet, dass** der wasserlösliche SiO₂-Präkursor kolloidales Siliziumdioxid oder eine wasserlösliche oder dispergierbare Si-haltige organische Verbindung darstellt, und/oderdass die Mullit-Präkursorlösung wasserlöslichen SiO₂-Präkursor in einer Menge enthält, die 20 bis 28 Gew.-%, insbesondere 22 bis 27 Gew.-% und besonders bevorzugt 23 bis 25 Gew.-%, bezogen auf die Gesamtmenge an aus der Präkursorlösung zu bildenden rechnerischen Al₂O₃- und SiOz-Anteilen im der Mullitphase, entspricht.

12. Verfahren nach mindestens einem der Ansprüche 8 bis 11, **dadurch gekennzeichnet, dass** als wasserlösliches organisches Polymer Poly(vinylpyrrolidon), Poly(vinylalkohol), Poly(ethylenoxid), insbesondere Poly(vinylpyrrolidon), eingesetzt wird, und/oderdass die wässrige Spinnlösung wasserlösliches organisches Polymer in einem Gewichts-Verhältnis von Polymer zum Gesamtoxidgehalt von 20:80 bis 40:60 und insbesondere 25:75 bis 30:70 enthält, und/oder dass das wasserlösliche organische Polymer ein erstes Polymer mit einem Molekulargewicht Mw von weniger als 200.000 g/mol sowie gegebenenfalls ein zweites Polymer mit einem Molekulargewicht Mw von mehr als 1.000.000 g/mol, insbesondere in einem Verhältnis im Bereich von 100:0 bis 90:10, umfasst.

13. Verfahren nach mindestens einem der Ansprüche 8 bis 12, **dadurch gekennzeichnet, dass** die wässrige ZrO₂-Präkursor-Lösung als Stabilisator eine Carbonsäure, insbesondere ausgewählt aus Glycin, Serin, Cystein, Oxalsäure, Malonsäure, Glutarsäure, Adipinsäure, Essigsäure, Glycolsäure, Milchsäure, Weinsäure, und Zitronensäure, besonders bevorzugt in Form von Glycin oder Serin, enthält.

14. Verfahren nach mindestens einem der Ansprüche 8 bis 13, **dadurch gekennzeichnet, dass** die Grünfasern bei einer Temperatur von 700 bis 1000 °C und bevorzugt 850 bis 900 °C unter pyrolytischer Entfernung flüchtiger Bestandteile kalziniert werden, insbesondere für einen Zeitraum von 240 bis 600 min und besonders bevorzugt von 300 bis 400 min, und/oder dass die anorganischen Präkursor-Fasern unter Erhalt von ZrO₂-verstärkten Mullitfasern bei einer Temperatur von 1200 bis 1600 °C und bevorzugt 1300 bis 1500 °C gesintert werden, insbesondere für einen Zeitraum von 60 bis 400 sec und besonders bevorzugt von 180 bis 300 sec.

15. Keramikbildende Grünfasern in Form von Filamenten, erhältlich nach den Verfahrensschritten (i) bis (iii) nach mindestens einem der Ansprüche 8 bis 14.

16. Verwendung der ZrO₂-verstärkten Mullitfasern nach mindestens einem der Ansprüche 1 bis 7 in Faser-Matrix-Verbundwerkstoffen, insbesondere mit polymerer, metallischer oder keramischer Matrix, insbesondere zur Verbesserung der Festigkeit, Steifigkeit und/oder der Hochtemperaturstabilität.

## Claims

1. ZrO₂-reinforced mullite fibers in the form of continuous filaments, **characterized in that** they contain at least 0.1% by weight of crystalline ZrO₂, wherein the ZrO₂-reinforced mullite fibers contain at least 80% by weight of crystalline mullite.

2. ZrO₂-reinforced mullite fibers according to claim 1, **characterized in that** the fibers have a diameter in the range of > 5 µm, and particularly in the range of 7 to 13 µm.

3. ZrO₂-reinforced mullite fibers according to claim 1 or 2, **characterized in that** they contain 3 to 15% by weight and preferably 3 to 10% by weight of crystalline ZrO₂, most preferably in the tetragonal modification.

4. ZrO₂-reinforced mullite fibers according to at least one of claims 1 to 3, **characterized in that** they contain at least 85% by weight and particularly preferably 90 to 97.5% by weight of crystalline mullite, and/or **in that** the crystalline ZrO₂ has grain sizes in the range from 10 to 60 nm, particularly from 20 to 35 nm.

5. ZrO₂-reinforced mullite fibers according to at least one of the preceding claims, **characterized in that** they contain, based on the total amount of Al₂O₃ and SiO₂, 71 to 80% by weight, particularly 73 to 78% by weight, and particularly preferably 75 to 78% by weight of a calculated Al₂O₃ content in the mullite phase.

6. ZrO₂-reinforced mullite fibers according to at least one of the preceding claims, **characterized in that** the residual phase contains or consists of crystalline Al₂O₃.

7. ZrO₂-reinforced mullite fibers according to at least one of the preceding claims, **characterized in that** they have a maximum tensile strength of at least 12.0 N, preferably of at least 14.0 N, and particularly of at least 15.0 N, and/or a breaking elongation of at least 1,5%, particularly of at least 1.6%, and particularly preferably of 2.0 ± 0.3%, in each case determined on a fiber bundle of 468 filaments with a thickness of 10 µm at a test speed of 5 mm/min on a fixed deflection with a diameter of 2.5 mm.

8. Process for producing ZrO₂-reinforced mullite fibers according to at least one of claims 1 to 7, **characterized in that**
(i) a spinning solution is prepared from a ceramic-forming SiO₂ precursor, a ceramic-forming Al₂O₃ precursor, a water-soluble organic polymer, a ceramic-forming ZrO₂ precursor, and optionally a stabilizer, wherein, if a stabilizer is used, it is used particularly as a solution with the ceramic-forming ZrO₂ precursor,
(ii) the water of the spinning solution is partially evaporated, if necessary, to produce a spinning mass with a zero-shear viscosity of at least 150 Pa·s, particularly in the range from 180 to 350 Pa·s, determined in each case at 25°C, wherein the zero-shear viscosity is determined with a plate-plate geometry having a plate diameter of 25 mm and a gap spacing of 0.5 mm,
(iii) the spinning mass is subjected to a dry spinning process to obtain green fibers,
(iv) the green fibers are calcined to form inorganic precursor fibers, wherein volatile components are removed pyrolytically, and
(v) the inorganic precursor fibers are sintered forming a mullite phase, to form ZrO₂-reinforced mullite fibers.

9. The process according to claim 8, **characterized in that** the water-soluble ZrO₂ precursor is a zirconium compound of the formula Zr(O)ₒX₍₄₋₂ₒ₎, wherein o = 0-2 and X is a halide ion, an organic anion, preferably an alcoholate, or NO₃⁻ and wherein the zirconium compound with o = 2 is present as a zirconium oxide sol, and/or that the ZrO₂-mullite precursor solution contains a water-soluble ZrO₂ precursor in an amount corresponding to 2 to 15% by weight and particularly 3 to 10% by weight of ZrO₂, based on the total amount of phases of ZrO₂, Al₂O₃ and mullite to be formed from the precursor solution.

10. The process according to at least one of claims 8 or 9, **characterized in that** the water-soluble Al₂O₃ precursor is an aluminum salt of the formula Alₙ(OH)ₘX₍₃ₙ₋ₘ₎, wherein X is a halide ion, NO₃⁻, or an organic anion, preferably Cl⁻, and wherein n = 1 or 2 and m = 0-5, and/or **in that** the mullite precursor solution contains a water-soluble Al₂O₃ precursor in an amount corresponding to 71 to 80% by weight, particularly about 73 to 78% by weight, and particularly preferably 75 to 78% by weight, based on the total amount of the calculated Al₂O₃ and SiO₂ content in the mullite phase to be generated from the precursor solution.

11. The process according to at least one of claims 8 to 10, **characterized in that** the water-soluble SiO₂ precursor is colloidal silica or a water-soluble or dispersible, Si-containing organic compound, and/or **in that** the mullite precursor solution contains a water-soluble SiO₂ precursor in an amount corresponding to 20 to 28% by weight, particularly 22 to 27% by weight, and particularly preferably 23 to 25% by weight, based on the total amount of the calculated Al₂O₃ and SiO₂ content in the mullite phase to be formed from the precursor solution.

12. The process according to at least one of claims 8 to 11, **characterized in that** the water-soluble organic polymer used is poly(vinylpyrrolidone), poly(vinyl alcohol), polyethylene oxide), particularly poly(vinylpyrrolidone), and/or **in that** the aqueous spinning solution contains a water-soluble organic polymer in a weight ratio of polymer to total oxide content of 20:80 to 40:60 and particularly 25:75 to 30:70, and/or that the water-soluble organic polymer contains a first polymer having a molecular weight Mw of less than 200.000 g/mol and optionally a second polymer having a molecular weight Mw of more than 1,000,000 g/mol, particularly in a ratio in the range from 100:0 to 90:10.

13. The process according to at least one of claims 8 to 12, **characterized in that** the aqueous ZrO₂ precursor solution contains a carboxylic acid as stabilizer, particularly selected from glycine, serine, cysteine, oxalic acid, malonic acid, glutaric acid, adipic acid, acetic acid, glycolic acid, lactic acid, tartaric acid, and citric acid, particularly preferably in the form of glycine or serine.

14. The process according to at least one of claims 8 to 13, **characterized in that** the green fibers are calcined at a temperature of 700 to 1000°C and preferably 850 to 900°C with pyrolytic removal of volatile components, particularly for a period of 240 to 600 min and particularly preferably 300 to 400 min, and/or that the inorganic precursor fibers are sintered to obtain ZrO₂-reinforced mullite fibers at a temperature of 1200 to 1600°C and preferably 1300 to 1500°C, particularly for a period of 60 to 400 sec and particularly preferably 180 to 300 sec.

15. Ceramic-forming green fibers in the form of filaments, obtainable according to the process steps (i) to (iii) according to at least one of claims 8 to 14.

16. Use of the ZrO₂-reinforced mullite fibers according to at least one of claims 1 to 7 in fiber-matrix composites, particularly with a polymeric, metallic, or ceramic matrix, particularly for improving the strength, stiffness and/or high-temperature stability.

## Revendications

1. Fibres de mullite renforcées par du ZrO₂, se présentant sous forme de filaments continus,
**caractérisées en ce qu'**elles contiennent au moins 0,1 % en poids de ZrO₂ cristallin, les fibres de mullite renforcées par du ZrO₂ contenant au moins 80 % en poids de mullite cristalline.

2. Fibres de mullite renforcées par du ZrO₂ selon la revendication 1,
**caractérisées en ce que** les fibres présentent un diamètre dans la plage de > 5 µm et en particulier dans la plage de 7 à 13 µm.

3. Fibres de mullite renforcées par du ZrO₂ selon la revendication 1 ou 2,
**caractérisées en ce qu'**elles contiennent 3 à 15 % en poids, de préférence 3 à 10 % en poids de ZrO₂ cristallin, de manière particulièrement préférée en modification tétragonale.

4. Fibres de mullite renforcées par du ZrO₂ selon l'une au moins des revendications 1 à 3,
**caractérisées en ce qu'**elles contiennent au moins 85 % en poids et de manière particulièrement préférée 90 à 97,5 % en poids de mullite cristalline, et/ou
**en ce que** le ZrO₂ cristallin présente des granulométries dans la plage de 10 à 60 nm, en particulier de 20 à 35 nm.

5. Fibres de mullite renforcées par du ZrO₂ selon l'une au moins des revendications précédentes,
**caractérisées en ce qu'**elles contiennent, par rapport à la quantité totale d'Al₂O₃ et de SiO₂, 71 à 80 % en poids, en particulier 73 à 78 % en poids et de manière particulièrement préférée 75 à 78 % en poids de part calculée en Al₂O₃ dans la phase de mullite.

6. Fibres de mullite renforcées par du ZrO₂ selon l'une au moins des revendications précédentes,
**caractérisées en ce que** la phase résiduelle contient de l'Al₂O₃ cristallin ou en est constituée.

7. Fibres de mullite renforcées par du ZrO₂ selon l'une au moins des revendications précédentes,
**caractérisées en ce qu'**elles présentent une force de traction maximale d'au moins 12,0 N, de préférence d'au moins 14,0 N et en particulier d'au moins 15,0 N, et/ou un allongement à la traction maximal d'au moins 1,5 %, en particulier d'au moins 1,6 % et de manière particulièrement préférée de 2,0±0,3 %, respectivement déterminés sur un faisceau de fibres de 468 filaments d'une épaisseur de 10 µm à une vitesse d'essai de 5 mm/min au niveau d'une réorientation fixe d'un diamètre de 2,5 mm.

8. Procédé de fabrication de fibres de mullite renforcées par du ZrO₂ selon l'une au moins des revendications 1 à 7,
**caractérisé en ce que**
(i) une solution de filage est préparée à partir d'un précurseur de SiO₂ formant une céramique, d'un précurseur d'Al₂O₃ formant une céramique, d'un polymère organique hydrosoluble, d'un précurseur de ZrO₂ formant une céramique et éventuellement d'un stabilisant, et lors de l'utilisation d'un stabilisant, celui-ci est utilisé en particulier comme solution avec le précurseur de ZrO₂ formant une céramique,
(ii) l'eau de la solution de filage est partiellement évaporée, si nécessaire, pour préparer une masse de filage ayant une viscosité à cisaillement nul d'au moins 150 Pa.s, en particulier dans la plage de 180 à 350 Pa.s, déterminée à 25 °C, la viscosité à cisaillement nul étant déterminée avec une géométrie du type à plateaux parallèles ayant un diamètre de plateau de 25 mm et un entrefer de 0,5 mm,
(iii) la masse de filage est soumise à un processus de filage à sec pour obtenir des fibres vertes,
(iv) les fibres vertes sont calcinées pour former des fibres de précurseur inorganiques, les composants volatils étant éliminés par voie pyrolytique, et
(v) les fibres de précurseur inorganiques sont frittées avec formation de phase de mullite pour former des fibres de mullite renforcées par du ZrO₂.

9. Procédé selon la revendication 8,
**caractérisé en ce que** le précurseur de ZrO₂ hydrosoluble représente un composé de zirconium de formule Zr(O)ₒX₍₄₋₂ₒ₎, dans laquelle o = 0 à 2 et X représente un ion halogénure, un anion organique, de préférence un alcoolate, ou du NO₃⁻, et dans laquelle, pour o = 2, le composé de zirconium est présent sous forme de sol d'oxyde de zirconium, et/ou
**en ce que** la solution de précurseur de ZrO₂ et de mullite contient un précurseur de ZrO₂ hydrosoluble en une quantité correspondant à 2 à 15 % en poids et en particulier à 3 à 10 % en poids de ZrO₂, par rapport à la quantité totale de phases de ZrO₂, d'Al₂O₃ et de mullite à former à partir de la solution de précurseur.

10. Procédé selon l'une au moins des revendications 8 ou 9,
**caractérisé en ce que** le précurseur d'Al₂O₃ hydrosoluble représente un sel d'aluminium de formule Alₙ(OH)ₘX₍₃ₙ₋ₘ₎, dans laquelle X représente un ion halogénure, du NO₃⁻ ou un anion organique, de préférence du CI-, et dans laquelle n = 1 ou 2 et m = 0 à 5, et/ou
**en ce que** la solution de précurseur de mullite contient un précurseur d'Al₂O₃ hydrosoluble en une quantité qui représente 71 à 80 % en poids, en particulier environ 73 à 78 % en poids et de manière particulièrement préférée de 75 à 78 % en poids, par rapport à la quantité totale de parts calculées en Al₂O₃ et en SiO₂, à générer à partir de la solution de précurseur, dans la phase de mullite.

11. Procédé selon l'une au moins des revendications 8 à 10,
**caractérisé en ce que** le précurseur de SiO₂ hydrosoluble est de la silice colloïdale ou un composé organique hydrosoluble ou dispersible, contenant du Si, et/ou
**en ce que** la solution de précurseur de mullite contient un précurseur de SiO₂ hydrosoluble en une quantité correspondant à 20 à 28 % en poids, en particulier à 22 à 27 % en poids et de manière particulièrement préférée à 23 à 25 % en poids, par rapport à la quantité totale de parts calculées en Al₂O₃ et en SiO₂, à former à partir de la solution de précurseur, dans la phase de mullite.

12. Procédé selon l'une au moins des revendications 8 à 11,
**caractérisé en ce que** l'on utilise comme polymère organique hydrosoluble la poly(vinylpyrrolidone), le poly(alcool vinylique), le poly(oxyde d'éthylène), en particulier la poly(vinylpyrrolidone), et/ou
**en ce que** la solution aqueuse de filage contient du polymère organique hydrosoluble dans un rapport pondéral entre le polymère et la teneur totale en oxyde de 20:80 à 40:60 et en particulier de 25:75 à 30:70, et/ou
**en ce que** le polymère organique hydrosoluble comprend un premier polymère ayant un poids moléculaire Mw inférieur à 200 000 g/mol, ainsi qu'éventuellement un deuxième polymère ayant un poids moléculaire Mw supérieur à 1 000 000 g/mol, en particulier dans un rapport compris entre 100:0 et 90:10.

13. Procédé selon l'une au moins des revendications 8 à 12,
**caractérisé en ce que** la solution aqueuse de précurseur de ZrO₂ contient comme stabilisant un acide carboxylique, en particulier choisi parmi la glycine, la sérine, la cystéine, l'acide oxalique, l'acide malonique, l'acide glutarique, l'acide adipique, l'acide acétique, l'acide glycolique, l'acide lactique, l'acide tartrique et l'acide citrique, en particulier de préférence sous forme de glycine ou de sérine.

14. Procédé selon l'une au moins des revendications 8 à 13,
**caractérisé en ce que** les fibres vertes sont calcinées à une température de 700 à 1000 °C et de préférence de 850 à 900 °C avec élimination pyrolytique des composants volatils, en particulier pendant une durée de 240 à 600 minutes et de manière particulièrement préférée de 300 à 400 minutes, et/ou
**en ce que** les fibres de précurseur inorganiques sont frittées à une température de 1200 à 1600 °C et de préférence de 1300 à 1500 °C, en particulier pendant une durée de 60 à 400 secondes et de manière particulièrement préférée de 180 à 300 secondes, pour obtenir des fibres de mullite renforcées par du ZrO₂.

15. Fibres vertes formant des céramiques, se présentant sous forme de filaments, pouvant être obtenues par les étapes (i) à (iii) du procédé selon l'une au moins des revendications 8 à 14.

16. Utilisation des fibres de mullite renforcées par du ZrO₂ selon l'une au moins des revendications 1 à 7 dans des matériaux composites à matrice de fibres, en particulier à matrice polymère, métallique ou céramique, en particulier pour améliorer la résistance, la rigidité et/ou la stabilité à haute température.
